**Europäisches Patentamt**

**European Patent Office**

**Office européen des brevets**

(19)

(11) Numéro de publication : **0 388 256 B1**

(12) **FASCICULE DE BREVET EUROPEEN**

(45) Date de publication du fascicule du brevet :
**25.11.92 Bulletin 92/48**

(51) Int. Cl.⁵ : **B60J 1/20**

(21) Numéro de dépôt : **90400623.6**

(22) Date de dépôt : **08.03.90**

(54) **Elément d'occultation d'une surface transparente.**

(30) Priorité : **16.03.89 FR 8903463**

(43) Date de publication de la demande :
**19.09.90 Bulletin 90/38**

(45) Mention de la délivrance du brevet :
**25.11.92 Bulletin 92/48**

(84) Etats contractants désignés :
**AT BE CH DE DK ES GB GR IT LI LU NL SE**

(56) Documents cités :
**AT-B- 298 995**
**FR-A- 2 535 385**
**US-A- 4 261 411**
**US-A- 4 779 918**

(73) Titulaire : **LE MARQUAGE INDUSTRIEL**
**30, rue de l'Avenir**
**F-92110 Clichy, Hauts de Seine (FR)**

(72) Inventeur : **Foreau, Luc Joel**
**171 Quai Dervaux**
**Asnieres (Hauts de Seine) (FR)**
Inventeur : **Levoy, Jean Marcel**
**231 rue Philippe Triaire**
**Nanterre (Hauts de Seine) (FR)**

(74) Mandataire : **Cabinet Pierre HERRBURGER**
**115, Boulevard Haussmann**
**F-75008 Paris (FR)**

EP 0 388 256 B1

Jouve, 18, rue Saint-Denis, 75001 PARIS

# Description

La présente invention concerne un élément d'occultation d'une surface transparente, notamment d'une glace de véhicule automobile, en particulier d'une glace arrière de véhicules utilitaires et commerciaux.

Dans le cas de véhicules utilitaires et commerciaux, il est fréquent, pour diverses raisons, que la carrosserie, en général non vitrée, comporte des parties vitrées latérales ainsi que les portières arrière munies d'une partie vitrée.

Bien qu'il existe également des véhicules de type fourgonnette dont la partie arrière de la fourgonnette soit complètement fermée sans glace, les utilisateurs préfèrent en général les fourgonnettes à surface vitrée.

Or, comme de tels véhicules servent à transporter du matériel, des outillages, etc... et que les surfaces vitrées permettent de voir ces produits à l'intérieur du véhicule, cela est à l'origine de nombreux vols.

Pour remédier à ces inconvénients, pendant un certain temps, on a appliqué des films transparents réfléchissants sur la face intérieure des surfaces vitrées. Toutefois, comme ces surfaces ainsi protégées sont extrêmement brillantes, leur utilisation a été interdite maintenant dans de nombreux pays.

Il est également possible d'occulter partiellement l'intérieur d'un véhicule comme par exemple une ambulance, en peignant ou en rendant translucides les surfaces vitrées, de manière à assurer l'éclairage naturel de l'intérieur du véhicule tout en rendant l'intérieur invisible de l'extérieur.

Cette solution, bien que donnant de bons résultats, est difficilement praticable sur certains types de véhicules, notamment des véhicules utilitaires et commerciaux car l'occultation des surfaces vitrées est une opération coûteuse nécessitant l'application de peinture ou l'attaque chimique du verre et d'autre part, cette transformation est irréversible.

Or, de nombreux utilisateurs souhaitent pouvoir transformer de nouveau les véhicules pour supprimer l'occultation par exemple pour la revente du véhicule ( voir aussi, par exemple, US-A-4,779,918).

La présente invention a pour but de créer un élément d'occultation amovible pour une surface transparente en particulier mais, de manière non limitative, à une glace de véhicule automobile tel qu'un véhicule utilitaire et commercial, une ambulance, etc...

A cet effet, l'invention concerne un élément d'occultation caractérisé en ce qu'il se compose d'un complexe comprenant :
- un film non transparent, auto-adhésif, muni d'une zone à transparence unidirectionnelle formée de parties découpées transparentes alternant avec des parties non transparentes,
- une couche de support portant le film auto-adhésif par sa face non adhésive,
- une couche de protection recouvrant de manière pelable la face collante,

le film auto-adhésif s'appliquant contre la surface à occulter après enlèvement de la couche de protection puis une fois l'ensemble accroché à la surface à occulter, la couche de support s'enlève de l'arrière du film auto-adhésif.

Ce moyen d'occultation, selon l'invention, offre l'avantage de se mettre en place très facilement et très rapidement au choix de l'utilisateur. La partie non transparente du film auto-adhésif peut recevoir des inscriptions ou indications telles que la marque de l'utilisateur, son numéro de téléphone, ou autres renseignements à caractère d'information ou publicitaire.

De plus, cet élément d'occultation peut être adapté par la couleur de ses parties non transparentes à l'esthétique générale du véhicule.

La ou les zones à transparence unidirectionnelle sont parfaitement opaques pour un spectateur qui se trouve à une distance même rapprochée du véhicule (sauf s'il colle ses yeux directement sur la surface vitrée). Par contre, ces zones à transparence unidirectionnelle sont parfaitement transparentes pour les personnes se trouvant à l'intérieur du véhicule comme le conducteur ou les passagers. Dans certains cas, cette transparence est nécessaire, voire indispensable, pour effectuer des manoeuvres de garage, de recul, etc...

Suivant un mode de réalisation particulièrement intéressant, la zone à transparence unidirectionnelle est formée de fenêtres constituées par des fentes horizontales découpées dans le film auto-adhésif et alternant avec des intervalles de film auto-adhésif.

La réalisation de cette zone à transparence unidirectionnelle est pratiquement imperceptible de l'extérieur du véhicule puisque l'alternance des bandes sombres qui correspondent aux parties découpées et les bandes à la couleur du film auto-adhésif, présente un effet qui ne dérange pas l'esthétique du véhicule.

L'élément d'occultation, selon l'invention, peut être prédécoupé à la forme des glaces des différents types de véhicules et se diffuser sous la forme de kits.

Les éléments d'occultation peuvent s'enlever facilement par pelage, par exemple pour la revente du véhicule ou si les informations portées par l'un ou les différents éléments d'occultation doivent être modifiés comme par exemple un changement d'adresse ou un changement de numéro de téléphone.

La présente invention sera décrite de manière plus détaillée à l'aide des dessins annexés, dans lesquels :
- La figure 1 est une vue en coupe à échelle très agrandie d'une partie d'un élément d'occultation selon l'invention.
- La figure 2 est une vue en perspective schématique d'un véhicule utilitaire et commercial équipé d'éléments d'occultation, selon l'invention,

- La figure 3 est une vue arrière du véhicule de la figure 2 au niveau de la glace occultée par un élément d'occultation, selon l'invention.

- La figure 4 montre schématiquement la vision à travers l'élément d'occultation, de l'intérieur du véhicule vers l'extérieur.

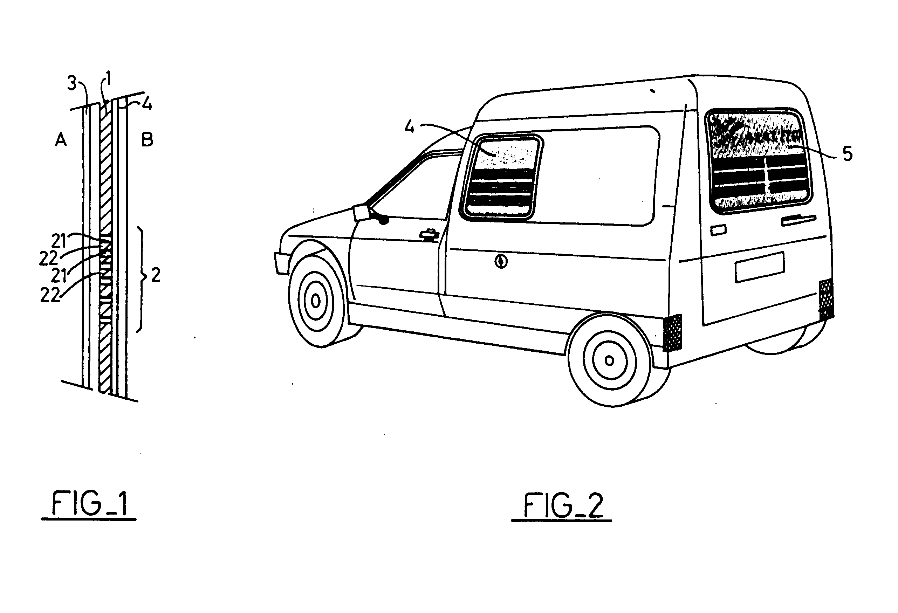

Selon la figure 1, l'élément d'occultation selon l'invention, destiné à occulter une surface transparente, comme par exemple une glace de portière ou une glace fixe de véhicule automobile tel qu'un véhicule utilitaire et commercial apparaissant aux figures 2, 3, 4, se compose de trois couches à savoir :

- d'un film 1, non transparent, auto-adhésif, muni d'une zone de transparence 2. Cete zone présente une transparence dite unidirectionnelle entre le côté A peu éclairé, et le côté B éclairé. Le côté A représente l'intérieur du véhicule, alors que le côté B en représente l'extérieur.

Ce film 1 est porté par une couche de support 3, par sa face non adhésive et l'autre face c'est-à-dire la face adhésive du film 1 est recouverte d'une couche de protection 4. La couche de protection 4 est susceptible de se peler de la face correspondante du film 1, en laissant intacte la couche adhésive. Pour mettre en place, l'élément d'occultation, on pèle totalement ou partiellement la couche de protection 4 en positionnant le film 1 et en l'appliquant pour le coller contre la glace. Puis on poursuit de peler la couche de protection 4 en appliquant au fur et à mesure le film 1 contre la glace. Lorsque le film 1 est collé contre la glace on peut enlever la couche de support 3.

Selon un mode de réalisation de l'invention, la zone 2 à transparence unidirectionnelle se compose d'un ensemble de découpe 21 séparé par des parties non découpées 22.

Le rapport entre la largeur des parties découpées 21 et des parties non découpées 22, dans une zone 2 dépend de l'éclairage à l'intérieur du volume A (intérieur du véhicule). De manière très schématique, cette répartition ou "pas" est choisie pour que la lumière sortant du véhicule ne soit pas suffisante pour permettre à un observateur extérieur de discerner se qui se trouve derrière la glace occultée tout en permettant à un observateur placé à l'intérieur (zone A) de recevoir suffisamment de lumière de l'extérieur pour voir nettement.

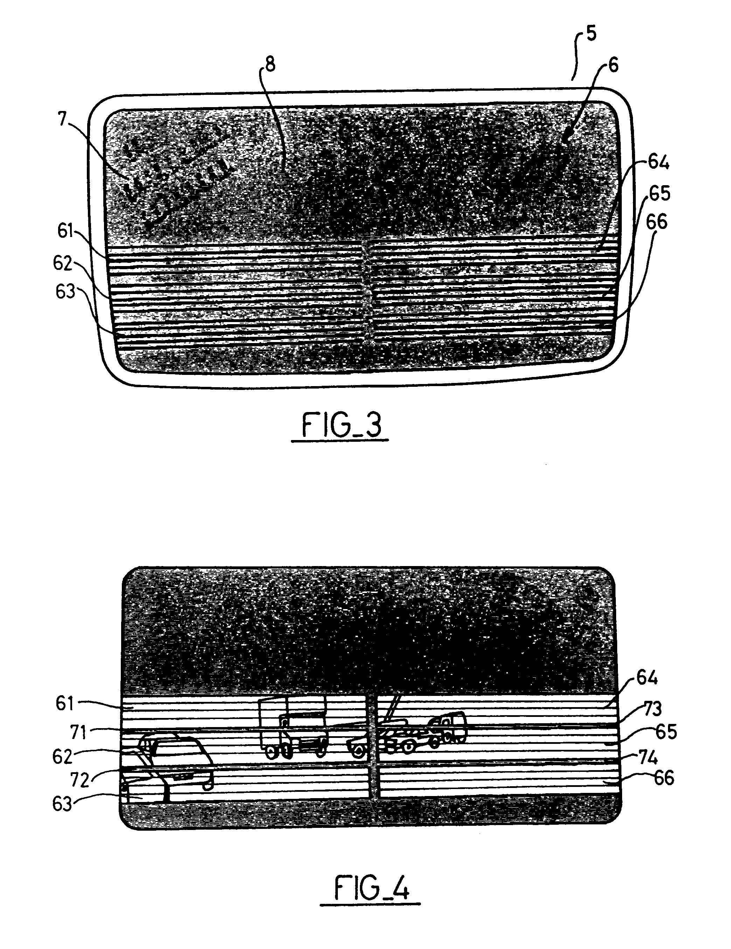

L'élément d'occultation 6 de la glace du vantail arrière 5 est représenté clairement à la figure 3 vu de l'extérieur. Cet élément d'occultation comporte six zones a transparence unidirectionnelle 61, 62, 63, 64, 65, 66 formées comme indiqué à propos de la figure 1 par des parties découpées apparaissant en noir et séparées par des parties non découpées dans le film 6 (film 1 à la figure 1).

Cet élément d'occultation 6 ne comporte pas nécessairement de zone à transparence unidirectionnelle sur toute la surface, mais seulement dans la partie servant par exemple au conducteur de voir la route à l'arrière du véhicule. Cela correspond à la partie inférieure de la glace ou de l'élément d'occultation. Par contre, la surface supérieure disponible peut être utilisée pour des indications telles que la raison sociale ou une marque, ou encore un numéro de téléphone 8.

La figure 4 montre le champ de vision à travers l'élément d'occultation mais de l'intérieur vers l'extérieur. Cette figure montre clairement que le champ d'observation extérieur du véhicule apparaît nettement pour l'observateur. De plus, cette figure montre que seules apparaissent les zones intermédiaires 71, 72, 73, 74 entre les zones à visibilité unidirectionnelle 61, 62, 63, 64, 65, 66 qui elles sont parfaitement transparentes.

## Revendications

1. Elément d'occultation d'une surface transparente, notamment d'une glace de véhicule automobile, élément caractérisé en ce qu'il se compose d'un complexe comprenant :

   - un film (1) non transparent, auto-adhésif, muni d'une zone (2) à transparence unidirectionnelle formée de parties découpées transparentes alternant avec des parties non transparentes,
   - une couche de support (3) portant le film auto-adhésif par sa face non adhésive,
   - une couche de protection (4) recouvrant de manière pelable la face collante,

   le film auto-adhésif s'appliquant contre la surface à occulter après enlèvement de la couche de protection puis une fois l'ensemble accroché à la surface à occulter, la couche de support (4) s'enlève de l'arrière du film auto-adhésif.

2. Elément d'occultation selon la revendication 1, caractérisé en ce que la zone à transparence unidirectionnelle (2) est formée de fenêtres constituées par des fentes horizontales (21) découpées dans le film auto-adhésif (1) et alternant avec des intervalles (22) de film auto-adhésif (1).

## Patentansprüche

1. Verdunkelungselement einer durchsichtigen Oberfläche, insbesondere einer Glasscheibe in Automobilen, **gekennzeichnet durch**

   - einen undurchsichtigen, selbstklebenden Film (1), ausgestattet mit einem in einer Richtung verlaufenden, durchsichtigen Bereich (2), der jeweils in Abschnitten mit undurchsichtigen Flächen abwechselt,
   - eine Trägerschicht (3), die den selbstklebenden Film auf dessen nichtklebender Schicht trägt,
- einer Schutzschicht (4), die die Klebefläche überlappt und so von dieser abgezogen werden kann,

wobei der selbstklebende Film an der zu verdunkelnden Fläche haftet, nachdem die Schutzschicht von ihr entfernt wurde, und wobei nach Abdeckung der gesamten abzudunkelnden Fläche die Trägerschicht (4) von der Rückseite des selbstklebenden Films weggenommen werden kann.

2. Verdunkelungselement gemäß Anspruch 1,
**dadurch gekennzeichnet,**
daß die durchsichtige, in einer Richtung verlaufende Fläche (2) aus Fenstern gebildet wird, die aus horizontalen Schlitzen (21), in den selbstklebenden Film (1) geschnitten, bestehen und in Abständen (22) mit dem selbstklebenden Film (1) abwechseln.

## Claims

1. Element for masking a transparent surface, especially a motor-vehicle window, which element is characterised in that it is composed of a complex comprising:
    - a non-transparent, self-adhesive film (1), equipped with a zone (2) which is transparent in one direction, formed from transparent cut-out parts alternating with non-transparent parts,
    - a support layer (3) carrying the self-adhesive film via its non-adhesive face,
    - a peelable protection layer (4) covering the adhesive face,
    - the self-adhesive film being applied against the surface to be masked after removal of the protection layer followed, once the assembly has been attached to the surface to be masked, by removal of the support layer (4) from the back of the self-adhesive film.

2. Masking element according to Claim 1, characterised in that the zone (2) which is transparent in one direction is formed from windows consisting of horizontal slits (21) cut out from the self-adhesive film (1) and alternating with intervals (22) of self-adhesive film (1).

FIG_1

FIG_2

EP 0 388 256 B1

FIG_3

FIG_4